# EUROPÄISCHE PATENTANMELDUNG

(11) **EP 2 481 467 A1**
(43) Veröffentlichungstag der Anmeldung: **01.08.2012**
(21) Anmeldenummer: 11152684.4
(22) Anmeldetag: 31.01.2011
(51) Int. Cl.: B01D 53/14

(54) **Lösungsmittel, Verfahren zur Bereitstellung einer Absorptionsflüssigkeit, sowie Verwendung des Lösungsmittels**

(71) Anmelder: Siemens Aktiengesellschaft, 80333 München (DE)
(72) Erfinder: Fischer, Björn, 60318, Frankfurt a.M. (DE); Joh, Ralph, 63500, Seligenstadt (DE); Schneider, Rüdiger, 65817, Eppstein (DE)

(57) **Zusammenfassung**

Die Erfindung betrifft ein Lösungsmittel (2) zur selektiven Absorption von CO₂ aus dem Rauchgas einer Verbrennungsanlage. Das Lösungsmittel (2) umfassend eine wässrige Lösung eines sekundären Amins (4) als aktive Waschsubstanz und einen Zusatzstoff (6), wobei der Zusatzstoff (6) ein Salz des Vitamins C oder E (3) umfasst. Die Erfindung betrifft weiterhin ein Verfahren zur Bereitstellung einer Absorptionsflüssigkeit, sowie die Verwendung des Lösungsmittels (2) zur selektiven Absorption von CO₂ aus dem Rauchgas einer Verbrennungsanlage.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid (CO₂) dabei mit einer Absorptionsflüssigkeit aus dem Rauchgas herausgewaschen (CO₂ Capture Prozess) .

Gängige Absorptionsflüssigkeiten (Lösungsmittel) basieren auf primären, sekundären oder tertiären Aminen und zeigen eine gute Selektivität und eine hohe Kapazität für Kohlendioxid CO₂. Hauptziel bei der Rauchgaswäsche ist die Verringerung des klimaschädlichen Kohlendioxids. Der dafür eingesetzte Prozess sollte aber keine weiteren Emissionen verursachen, die die Umwelt bzw. den Menschen schädigen können.

Ein schwerwiegenderes Problem entsteht jedoch im CO₂ Capture-Prozess durch die Verbindung der Amine aus der Absorptionsflüssigkeit mit den Stickoxiden (NOₓ) aus dem Rauchgas der Verbrennungsanlage. Auch wenn die Konzentration an Stickoxiden im Rauchgas vergleichsweise gering ist, bilden Amine mit Stickoxiden direkt, durch Abbauprodukte oder über Nebenreaktionen auf lebende Organismen karzinogen (krebserregend) wirkende Nitrosoamine (N-Nitroso-Verbindungen). Die gebildeten Nitrosamine können einen geringen Dampfdruck aufweisen, weshalb sie über das gereinigte Rauchgas mit in die Atmosphäre ausgetragen werden können.

In der Öffentlichkeit stehen Nitrosamine unter hoher Beachtung, da sie in Nahrungsmitteln (insbesondere bei unsachgemä-βer Zubereitung) vorkommen können und in der überwiegenden Zahl als krebserregend gelten. Daher sind Nitrosamine im Fokus der aktuellen Diskussion um Kohlendioxid arme Kraftwerke und sicherheitsrelevant für den Betrieb von mit Aminbasierten Lösungsmitteln. Eine Minimierung der Nitrosaminkonzentration im CO₂ Capture Prozess ist daher von großer Wichtigkeit für die Akzeptanz der Technologie in der Öffentlichkeit.

Nur die aus sekundären Aminen gebildeten Nitrosamine sind zeitlich stabil. Die primären Nitrosamine reagieren weiter zu Alkenen und Alkoholen (Lehrbuch der organischen Chemie; Beyer und Walter, 1991), welche deutlich unbedenklicher sind als die karzinogenen Nitrosamine. Tertiäre Amine können nur durch ihre Zersetzungsprodukte, sekundäre Amine, zu stabilen Nitrosaminverbindungen reagieren. Der Grund warum sekundäre Amine trotzdem den primären Aminen in CO₂ Capture-Anlagen vorgezogen werden ist die geringere Bindungsenergie und damit eine niedrigere Wirkungsgradeinbuße des gesamten Kraftwerks. Au-βerdem zeigen sekundäre Amine gegenüber primären Aminen eine deutlich höhere Beladungskapazität für CO₂. Tertiäre Amine haben den Nachteil, dass sie sehr langsam mit Kohlendioxid reagieren und dadurch große Kolonnen benötigen.

Bei Gaswäschen in der chemischen Industrie tritt das Problem meist nicht auf, da die nitrosierende Substanz (Stickstoffdioxid bzw. der zu Stickstoffdioxid zu oxidierende Stickstoffmonoxid) in der Regeln nicht vorhanden ist und es dadurch auch nicht zu einer Nitrosierung kommen kann. In einigen Prozessen, wie z.B. der Reifenindustrie, werden dem Prozess gezielt Inhibitoren zugesetzt, um die Bildung der N-Nitroso Komponenten zu verhindern. In der Lebensmittel Industrie gibt es einige bekannte und wirksame Inhibitoren, wie z.B. Selen. Das dort vorliegende saure Milieu unterscheidet sich aber deutlich von den alkalischen Bedingungen bei der CO2-Abscheidung. Im CO₂-Abscheideprozess müssten diese Inhibitoren, sofern sie den unter den Bedingungen eines CO₂ Capture Prozesses überhaupt wirksam sind, in großen Mengen vorgelegt werden, um bei der Reaktion mit dem nitrosierenden Reagenz gegen das in großer Konzentration vorliegende Amin zu konkurrieren. Nachteilig für den CO₂ Capture-Prozess wirkt sich dabei die große Fracht an inaktiver Substanz (Inhibitor) im Prozesskreislauf aus, die zusätzlich umgepumpt werden muss und dadurch den Wirkungsgrad des Kraftwerks weiter senkt. Eine Aufgabe der Erfindung ist es, ein Lösungsmittel mit einem sekundären Amin anzugeben, welches bei Kontakt mit Stickstoffdioxid deutlich in der Bildung von Nitrosaminen reduziert ist. Eine weitere Aufgabe der Erfindung besteht in der Angabe eines Verfahrens zur Bereitstellung einer Absorptionsflüssigkeit, die in der Bildung von Nitrosaminen reduziert ist. Weiterhin ist es Aufgabe der Erfindung eine Verwendung eines Lösungsmittels zur selektiven Absorption von CO₂ aus dem Rauchgas einer Verbrennungsanlage anzugeben. Zudem gilt es die Nachteile aus dem Stand der Technik zu vermeiden.

Die auf ein Lösungsmittel gerichtete Aufgabe der Erfindung wird gelöst durch ein Lösungsmittel, umfassend eine wässrige Lösung eines sekundären Amins und einem Zusatzstoff, wobei der Zusatzstoff ein Salz des Vitamins C oder E (Inhibitor) umfasst.

Die Erfindung macht sich zu nutze, dass Stickstoffdioxid wesentlich schneller mit einem Salz des Vitamins C oder E reagiert, als mit einem sekundären Amin. Dadurch kommt es bevorzugt zur Bildung eines Nitritesters und anschließender NO Ausgasung. Die Reaktion des Stickstoffdioxids mit den sekundären Aminen erfolgt im Vergleich zu der Reaktion mit den Salzen der Vitamine (z.B. Natriumascorbat) relativ langsam, so dass durch die Erfindung die Bildung von stabilen, sekundären Nitrosaminen deutlich inhibiert wird. Daraus resultiert, dass sich bereits durch eine geringe Zugabe eines Salz des Vitamins C oder E zum Lösungsmittel die Bildung an stabilen Nitrosaminverbindungen im großen Umfang reduzieren lässt. Vor allem die schnelle Reaktion des Inhibitors bewirkt schon eine deutlich Reduktion der Nitrosaminbildung bei Zugabe einer geringen Menge. Die Stärke der Inhibierung hängt ab von der Menge an Salz des Vitamins C oder E und der Reaktionsgeschwindigkeit dieses mit der nitrosierenden Substanz, dass durch den Zusatzstoff dem Lösungsmittel beigemischt ist. Vorteilhaft hat sich die Zugabe eines Salzes des Vitamins C oder E in dem Zusatzstoff im unteren Prozentbereich (Gewichtsprozent), bezogen auf die Menge an sekundärem Amin, erwiesen. Die besondere Erkenntnis der Erfindung ist es, dass sich die Salze des Vitamins C oder E vorteilhaft für den CO₂ Capture-Prozess einsetzten lassen. Denn anders als erwartet, ist die Menge an Salz des Vitamins C oder E, die für eine effektive Inhibierung erforderlich ist, sehr gering, sodass der Umpump an Lösungsmittel im CO₂ Capture-Prozess nur geringfügig erhöht wird. Zudem sind die Salze des Vitamins C oder E, anders als erwartet, für den CO₂ Capture-Prozess geeignet, da sie unter den vorliegenden Bedingungen (alkalisches Mileu und Temperaturen > 100°C) stabil sind. Des Weiteren sorgt der Salzcharakter der Vitamine dafür, dass weder der Inhibitor selbst, noch deren Abbauprodukte mit dem gereinigten Rauchgas ausgetragen werden können.

Durch die Erfindung wird der Aufwand für besondere Maßnahmen im Umgang mit dem nitrosaminbildenen Lösungsmittel erheblich reduziert. Die verwendeten Amine können Alkanolamine, sterisch gehinderte Amine, Aminosäuren oder Aminosäuresalze sein. Das sekundäre Amin in dem Lösungsmittel ist die vorrangige aktive Waschsubstanz des Absorbens.

Vorteilhaft hat sich ein Verhältnis zwischen sekundären Amin und dem Salz des Vitamins C oder E zwischen 99:1 und 99,99:0,01, und weiter vorteilhaft zwischen 99,1:0,1 und 99,5:0,5 erwiesen. Das Verhältnis bezieht sich auf Gewichtprozente. Ziel der Zugabe des Zusatzstoffes ist vornehmlich eine deutliche Inhibierung der Bildung von stabilen Nitrosaminen. Durch das Salz des Vitamins C oder E in dem Zusatzstoff wird dieses Ziel erreicht.

In einer Vorteilhaften Ausgestaltung ist das sekundäre Amin ein Aminosäuresalz. In einer weiteren vorteilhaften Ausgestaltung ist das Salz des Vitamins C Natriumascorbat. Aminosäuresalze haben gegenüber anderen Aminen wie Alkanolamine, sterische gehinderten Aminen oder Aminosäuren den Vorteil, dass sie keinen merklichen Dampfdruck aufweisen. Das Erfindungsgemäße Lösungsmittel ist bei Aminosäuresalzen besonders vorteilhaft anwendbar, da bei Aminosäuresalzen die nachträgliche Aufreinigung, bzw. die Zerstörung der stabilen Nitrosamine weitaus schwieriger ist als im Vergleich zu herkömmlichen Aminen wie den Alkanolaminen oder sterisch gehinderten Aminen. Bei Alkanolaminen bietet sich die Destillation zur Aufreinigung an. Aufgrund des nicht vorhandenen Dampfdrucks ist dies hingegen bei Aminosäuresalzen nicht möglich. Diese können lediglich durch Kristallisation des Salzes von den Nitrosaminen getrennt werden.

Die auf ein Verfahren gerichtete Aufgabe wird gelöst durch ein Verfahren zur Bereitstellung einer Absorptionsflüssigkeit, bei dem eine wässrigen Lösung mit einem sekundären Amin angesetzt wird, und in die wässrige Lösung ein Zusatzstoff eingebracht wird, wobei der Zusatzstoff ein Salz des Vitamins C oder E umfasst.

Der Zusatzstoff kann dabei noch weitere Bestandteile beinhalten.

Vorteilhaft hat sich ein Verhältnis zwischen dem sekundären Amin und dem Salz des Vitamins C oder E zwischen 99:1 und 99,99:0,01, und weiter vorteilhaft zwischen 99,1:0,1 und 99,5:0,5 erwiesen.

Bei einer besonderen Anwendung des Verfahrens, wird als sekundäres Amin ein Aminosäuresalz in der wässrigen Lösung gelöst. Als Salz des Vitamins C wird vorteilhaft Natriumascorbat gelöst.

Die auf eine Verwendung gerichtete Aufgabe der Erfindung ist gelöst durch die Verwendung eines Lösungsmittels zur selektiven Absorption von CO₂ aus dem Rauchgas einer Verbrennungsanlage, wobei das Lösungsmittel eine wässrige Lösung eines sekundären Amins und einen Zusatzstoff enthält, wobei der Zusatzstoff ein Salz des Vitamins C oder E umfasst. Die Verbrennungsanlage kann dabei ein fossil befeuerten Dampfkraftwerk, eine Gasturbinenanlage, oder eine kombinierte Gas- und Dampfturbinenanlage sein.

Nachfolgend werden Ausführungsbeispiele der Erfindung anhand von Figuren näher erläutert. Darin zeigt:
- FIG 1: ein Diagramm mit der Bildungsrate von Nitrosaminen über der Zeit,
- FIG 2: möglicher Reaktionsweg des Natriumascorbat mit Nitrit als Beispiel einer nitrosierenden Substanz,
- FIG 3: ein Beispiel eines sekundären Amins,
- FIG 4: ein alternatives Beispiel eines sekundären Amins,

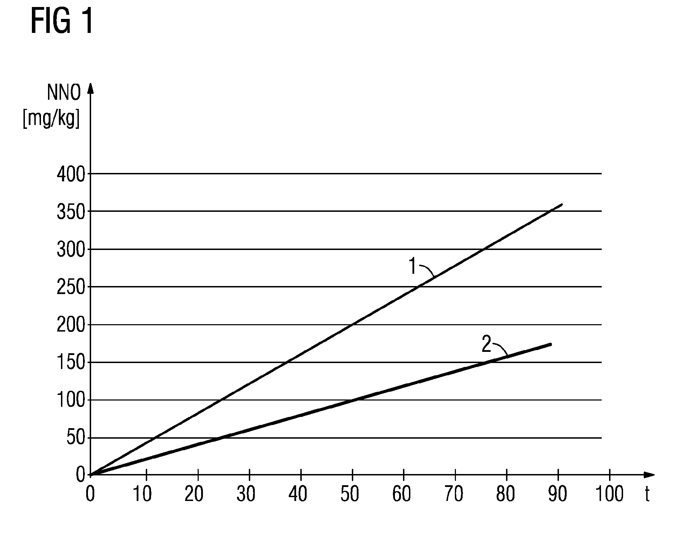

Das in FIG 1 dargestellte Diagramm zeigt die Bildungsrate von stabilen Nitrosaminen (NNO) in mg pro kg über der Zeit. Die obere Funktion zeigt schematisch die Bildungsrate eines Lösungsmittels 1 mit einem sekundären Amin 4 als aktive Waschsubstanz. Zu erkennen ist der Anstieg der Nitrosamine 5 über die Zeit, also in Verbindung des Lösungsmittels mit dem CO₂-haltigen Rauchgas. Der Anstieg der Nitrosaminkonzentration erfolgt bis zum Gleichgewicht der Reaktion der stabilen Nitrosamine 5 in dem Lösungsmittel 1 (nicht in der Abbildung zu erkennen). Die unter Funktion zeigt ein Lösungsmittel 2 mit demselben sekundärem Amin 4 und einem ein Salz des Vitamins C oder E 3 umfassenden Zusatzstoff 6. Das Verhältnis zwischen sekundären Amin 4 und Salz des Vitamins C oder E 3 beträgt in diesem Ausführungsbeispiel 99,5:0,5. Die Funktionen zeigen, dass die Bildungsrate bei einem Lösungsmittel mit einem Zusatzstoff 6, der ein Salz des Vitamins C oder E 3 enthält, gegenüber einem Lösungsmittel mit einem rein sekundären Amin 4 wesentlich geringer ist. Mit Zunehmender Konzentration an Salz des Vitamins C oder E 3 lässt sich die Bildung von Nitrosaminen 5 weiter inhibieren.

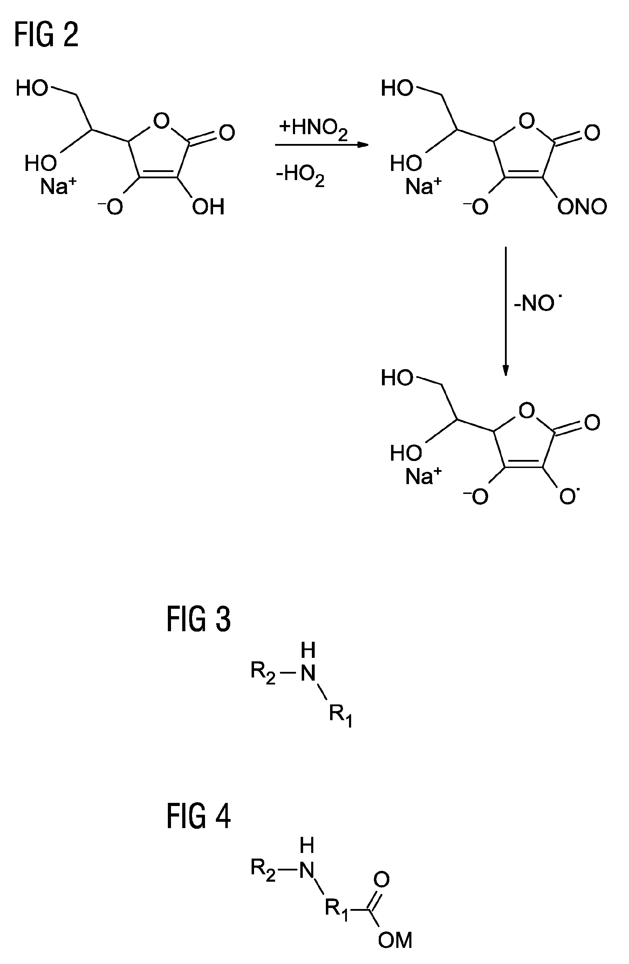

FIG 2 zeigt eine Darstellung eines möglichen Reaktionsweges des Natriumascorbat (Natriumaslz des Vitamin C) mit Nitrit als nitrosierende Substanz. Das Natriumascorbat reagiert mit dem gelösten Nitrit unter Abgabe von Wasser zu einem Nitritester, welcher durch Abspaltung von NO (welches ausgast) zu einem Semichinon reagiert. Weitere Reaktionen sind möglich. In Summe muss Natriumascorbat kontinuierlich nachgegeben werden, wie es durch die Reaktion mit Nitrit verbraucht wird.

Die FIG 3 und FIG 4 zeigen beispielhafte sekundäre Amine. FIG 3 zeigt ein sekundäres Amin, wobei R1 und R2 stehen für Wasserstoff, Alkyl, Aryl, Hydroxylalkyl oder Halogenalkyl. FIG 4 zeigt ein sekundäres Amin, wobei R1 und R2 stehen für Alkyl, Aryl, Hydroxylalkyl, Halogenalkyl und M für Na, K, Li, Mg, Ca oder Be.

## Patentansprüche

1. Lösungsmittel (2) umfassend eine wässrige Lösung eines sekundären Amins (4) und einen Zusatzstoff (6), wobei der Zusatzstoff (6) ein Salz des Vitamins C oder E (3) umfasst.

2. Lösungsmittel (2) nach Anspruch 1, wobei das Verhältnis zwischen dem sekundären Amin (4) und dem Salz des Vitamins C oder E (3) zwischen 90:10 und 99,99:0,01 liegt.

3. Lösungsmittel (2) nach einem der Ansprüche 1 oder 2, wobei das sekundäre Amin (4) ein Aminosäuresalz ist.

4. Lösungsmittel (2) nach einem der Ansprüche 1 bis 3, wobei das Salz des Vitamins C (3) Natriumascorbat ist.

5. Verfahren zur Bereitstellung einer Absorptionsflüssigkeit, bei dem
a) eine wässrigen Lösung mit einem sekundären Amin (4) angesetzt wird, und
b) in die wässrigen Lösung ein Zusatzstoff (6) eingebracht wird, wobei der Zusatzstoff (6) ein Salz des Vitamins C oder E (3) umfasst.

6. Verfahren nach Anspruch 5, bei dem das Verhältnis zwischen sekundären Amin (4) und dem Salz des Vitamins C oder E (3) auf zwischen 80:20 und 99:1 eingestellt wird.

7. Verfahren nach einem der Ansprüche 5 oder 6, bei dem das sekundäre Amin (4) ein Aminosäuresalz ist.

8. Verfahren nach einem der Ansprüche 5 bis 7, bei dem das Salz des Vitamins C (3) Natriumascorbat ist.

9. Absorptionsflüssigkeit, hergestellt nach einem der Ansprüche 5 bis 8.

10. Verwendung eines Lösungsmittels (2) zur selektiven Absorption von CO₂ aus dem Rauchgas einer Verbrennungsanlage, wobei das Lösungsmittel (2) eine wässrige Lösung eines sekundären Amins (4) und einen Zusatzstoff (6) enthält, wobei der Zusatzstoff (6) ein Salz des Vitamins C oder E (3) umfasst.

11. Verwendung nach Anspruch 10, bei der die Absorption von Kohlendioxid aus dem Rauchgas eines fossil befeuerten Dampfkraftwerks, aus dem Abgas einer Gasturbinenanlage, oder aus dem Abgas einer kombinierten Gas- und Dampfturbinenanlage erfolgt.
